# FASCICULE DE BREVET EUROPEEN

(11) **EP 1 335 647 B1**
(45) Date de publication et mention de la délivrance du brevet: **16.03.2005**
(21) Numéro de dépôt: 01993400.9
(22) Date de dépôt: 09.11.2001
(51) Int. Cl.: A01N 41/10

(54) **COMPOSITION FONGICIDE A BASE D'HALOSULFONE POUR EMBALLAGE**
FUNGIZIDZUSAMMENSETZUNG AUF HALOGENSULFONBASIS FÜR VERPACKUNGEN
FUNGICIDE COMPOSITION BASED ON HALOSULPHONE FOR PACKAGING

(30) Priorité: 10.11.2000 FR 0014455
(43) Date de publication de la demande: 20.08.2003
(73) Titulaire: Johnson, Richard C., 75007 Paris (FR)
(72) Inventeur: Johnson, Richard C., 75007 Paris (FR)
(74) Mandataire: Eidelsberg, Olivier
(86) Numéro de dépôt international: PCT/FR2001/003486
(87) Numéro de publication internationale: WO 2002/037962

(56) Documents cités:
- WO-A-94/09209
- DATABASE WPI Section Ch, Week 198519 Derwent Publications Ltd., London, GB; Class C03, AN 1985-113069 XP002175322 & JP 60 054301 A (HOKKO CHEM IND CO LTD), 28 mars 1985 (1985-03-28)
- CHEMICAL ABSTRACTS, vol. 83, no. 11, 1975 Columbus, Ohio, US; abstract no. 92366, XP002175320 & JP 75 046833 A (SUMITOMO) 25 avril 1975 (1975-04-25)
- DATABASE CHEMABS [en ligne] CHEMICAL ABSTRACTS SERVICE, COLUMBUS, OHIO, US; LAKS, PETER E. ET AL: "Performance of chlorothalonil and chlorothalonil/biocide combinations in anti-sapstain tests" retrieved from STN Database accession no. 115:108444 XP002175321 & FOR. PROD. J. (1991), 41(5), 23-30,

## Description

La présente invention concerne des feuilles d'emballage revêtues d'une composition fongicide qui permettent une protection sur une longue durée du produit emballé, vis-à-vis du développement des moisissures. La présente invention se rapporte en particulier au domaine de l'emballage de savons ou de produits alimentaires, notamment des emballages ou des étiquettes en papier ou en carton de produits de ce genre.

Dans le présent mémoire on entend par feuille d'emballage également une étiquette.

Un fongicide bien connu, par exemple dans le domaine de l'emballage des savons, est la di-iodo-méthyl-p-tolylsulfone, également connu sous le nom de Amical (marque déposée). Ce composé dénommé DIMPTS est un excellent fongicide à appliquer sur les emballages notamment les emballages de savons, et combat parfaitement sur le long terme les moisissures pouvant se former sur les papiers d'emballage. Ce produit présente cependant l'inconvénient d'être très coûteux.

Le document JP-A-60 054301 décrit une composition à base de DIMPTS et de chlorothalonil et son utilisation comme fongicide sur divers matériaux. Il ne décrit pas une feuille d'emballage. En outre, il n'est pas indiqué précisément que le mélange fongicide est appliqué en surface sur du papier, notamment du papier d'emballage pour du savon ou des aliments. Enfin, ce document ne précise pas la granulométrie du mélange.

Le document JP-A-75046833 décrit une composition comportant de la DIMPTS et du chlorothalonil et son utilisation comme agent conservateur pour divers matériaux. Il ne décrit pas non plus une feuille d'emballage. Il n'est pas non plus décrit d'appliquer le mélange fongicide en surface, pour des emballages de savon ou de produits alimentaires. En outre, ce document ne précise pas la granulométrie du mélange.

Le document FOR. PROD. J. (1991), 41 (5), 23-30 décrit l'efficacité accrue du chlorothalonil en présence de DIMPTS pour lutter contre les champignons à la surface du bois. Il ne décrit pas non plus de feuille d'emballage et notamment une feuille d'emballage pour des produits alimentaires ou du savon. En outre, il n'est pas non plus décrit le fait de prévoir un mélange à petite granulométrie, notamment inférieure à 10 micromètres, de préférence inférieure à 5 micromètres.

La présente invention vise une feuille d'emballage, notamment en papier, ayant d'excellentes propriétés fongicides, notamment en vue d'emballer du savon ou des produits alimentaires et notamment des propriétés fongicides aussi bonnes que les feuilles d'emballage réalisées à base de DIMPTS, mais en étant cependant beaucoup moins coûteux à fabriquer, notamment 2 à 3 fois moins coûteux.

Suivant la présente invention un ensemble est tel que défini à la revendication 1.

Les radicaux alcoyle préférés ont de 1 à 3 atomes de carbone. On préfère surtout le radical méthyle.

Suivant un mode préféré de l'invention, le composé B. est le chlorothalonil ou tétrachloroisophtalonitrile ou 2,4, 5, 6 tétrachloro-1,3 benzène dicarbonitrile, et le composé A et la di-iodométhyl-p-tolyl-sulfone : (DIMPTS)

Suivant un mode de réalisation préféré de l'invention, le mélange comporte de 10 à 70 % en poids de DIMPTS et de 90 à 30 % en poids de chlorothalonil.

La feuille d'emballage suivant l'invention est moins coûteuse parce que le mélange fongicide est bien moins coûteux que ceux connus déjà pour des applications en surface, et parce que l'application en surface en diminue la quantité à appliquer.

Jusqu'à maintenant on n'avait jamais pensé, ni réussi à appliquer une suspension de ce genre sur du papier, alors même que ses propriétés fongicides sont connues depuis 1975. Le fait de prévoir une petite granulométrie permet ainsi une telle application tout en ayant cependant un effet fongicide suffisant malgré l'application uniquement en surface.

La feuille d'emballage suivant l'invention est notamment utilisée pour emballer du savon, des produits alimentaires, ou en tant qu'étiquette sur des emballages de ce genre.

Pour préparer un exemple de feuille d'emballage suivant l'invention, on peut mélanger dans un agent de mise en suspention, par exemple de l'eau ou un alcanol, du tétrachloroisophtalonitrile (ou chlorothalonil) et de la di-iodométhyl-p-tolyl-sulfone (ou amical), à raison de 70 % en poids de chlorothalonil et 30 % en poids de DIMPTS, la composition de la suspension aqueuse étant telle qu'elle contient 41 % de matière active. L'aspect du mélange est un liquide beige, dont la densité est comprise entre 1,24 et 1,28 et le pH est compris entre 5 et 8, tandis que la granulométrie est comprise entre 1 et 4 microns. En outre, un liant tel que l'amidon ou un latex est ajouté au mélange dans des proportions en poids par rapport au mélange de 0,2 à 1,5.

Le mélange obtenu peut alors être incorporé soit dans une sauce de couchage, soit ajouté au moyen d'une size press à un papier d'emballage. La gamme de dosage recommandé est de 500 à 4.000 ppm fondé sur le poids sec du papier, ou sur la colle.

Le papier d'emballage peut avoir un poids compris entre 40 g/m² et 150 g/m², tandis que la couche protectrice en surface a un poids compris entre 2 et 20 g/m², de préférence entre 5 et 15 g/m². Dans le cas d'un carton, celui-ci a un poids compris entre 150 g/m² et 350 g/m².

Le test suivant a été réalisé. Deux faces d'un papier industriel sans bois de 80 g/m² en sec, ayant une valeur COBB à une minute de 25 à 35, sont mises en contact avec 6 souches de champignons pendant 14 jours, dans les conditions de l'essai qualitatif de la norme AFNOR X 41 517 : les souches utilisées sont : Aspergillus Sydowi, Aspergillus Versicolor, Cladosporium Herbarum, Cladosporium Sphaerospernum, Penicillium Citrinum et Pénicillium Corylophilum. Au bout de ce délai, l'appréciation visuelle du développement des moisissures est transcrite à l'aide d'un code de 0 à 6+, la valeur 6+ étant attribuée au témoin sans traitement, alors que la notation 0 correspond à aucun développement des moisissures ensemencées.

La valeur COBB est une mesure de résistance à l'eau.

| FONGICIDES | APPRECIATION DU DEVELOPPEMENT RECTO | APPRECIATION DU DEVELOPPEMENT VERSO |
|---|---|---|
| témoin T₀ | 6+ | 6+ |
| Chlorothalonil seul T₁ | 2+ | 2+ |
| DIMPTS seul T₂ | 0+ | 0+ |
| Chlorothalonil +ZPT T₃ | 5+ | 2+ |
| DIMPTS + ZPT T₄ | 0+ | 0+ |
| Chlorothalonil+DIMPTS T₅ | 0+ | 0+ |

Les solutions fongicides utilisées dans ce test sont préparées de la même manière que mentionnées ci-dessus. En ce qui concerne le fongicide T₁, on mélange dans de l'eau du chlorothalonil. Le produit fongicide T₂ est préparé à base de di-iodométhyl-p-tolyl-sulfone uniquement. Le fongicide T₃ est préparé à partir d'un mélange de chlorothalonyle et de zinc pyrithione. Le fongicide T₄ est préparé à partir d'un mélange d'amical (di-iodométhyl-p-tolyl-sulfone) et de zinc pyrithione. Enfin, le fongicide T₅ correspond au mélange donné à titre d'exemple ci-dessus suivant l'invention, c'est-à-dire un mélange de chlorotalonyle et de di-iodo-méthyl-p-tolyl-sulfone ou amical.

Comme on le voit sur le tableau, le chlorothalonil seul est un fongicide moyen. L'amical seul est un excellent fongicide. Cependant, il est très coûteux.

Le chlorothalonil mélangé au zinc pyrithione ne donne pas de bon résultat. En revanche le zinc pyrithione mélangé au DIMPTS donne de bons résultats. Cependant, le zinc pyrithione est aussi cher que le DIMPTS. Mélangé au DIMPTS, le chlorothalonyl donne un fongicide aussi efficace que le DIMPTS seul ou que le DIMPTS mélangé au zinc pyrithione, deux fongicides beaucoup plus coûteux à fabriquer que le fongicide utilisé suivant l'invention.

## Revendications

1. Ensemble, constitué d'un article et d'une feuille d'emballage emballant l'article, la feuille comportant une composition fongicide, comportant un mélange
- du composé A 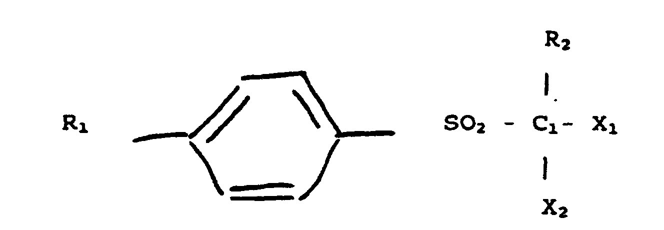 où R₁ est un radical alcoyle, alcoxy ou alcoylène ayant de 1 à 6 atomes de carbone, R₂ étant H, un radical alcoyle ou alcoylène ayant de 1 à 6 atomes de carbone, X₁ étant un halogène, notamment de l'iode, du brome ou du chlore, X₂ étant un halogène, notamment de l'iode, du chlore ou du brome ; et
- du composé B de formule développée : 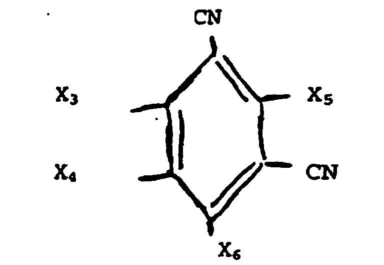 où X₃, X₄, X₅, X₆ identiques ou différents peuvent être choisis parmi des halogènes, des composés alcoyle ayant de 1 à 6 atomes de carbone ou l'hydrogène, **caractérisé en ce que**
- la composition fongicide est appliquée sous la forme d'une couche en surface sur la feuille,
- la granulométrie du mélange dans la couche est inférieure à 10 µm, et
- l'article est du savon ou un produit alimentaire.

2. Ensemble suivant la revendication 1, **caractérisée en ce que** la granulométrie est inférieure à 5 µm.

3. Ensemble suivant la revendication 1 ou 2, **caractérisée en ce que** la composition fongicide comporte un liant, notamment de l'amidon ou un latex.

4. Ensemble suivant la revendication 1, 2 ou 3, **caractérisée en ce que** la couche de composition fongicide a un poids compris entre 2 et 15 g/m².

5. Ensemble suivant l'une des revendications 1 à 4, **caractérisée en ce que** la feuille est en papier, ayant un poids compris entre 40 g/m² et 150 g/m².

6. Ensemble suivant la revendication 1, 2, 3 ou 4, **caractérisée en ce que** la feuille est en carton, ayant un poids compris entre 150 g/m² et 350 g/m².

7. Ensemble suivant l'une des revendications 3 à 6, **caractérisée en ce que** le rapport pondéral du liant sur le mélange est compris entre 0,2 et 1,5.

8. Ensemble suivant l'une des revendications 1 à 7, **caractérisée en ce que** le mélange comporte de 10 à 70 % en poids de (A) et 90 % à 30 % en poids de(B).

9. Ensemble suivant l'une des revendications précédentes **caractérisée en ce que** (A) est la di-iodométhyl-p-tolylsulfone.

10. Ensemble suivant l'une des revendications précédentes **caractérisée en ce que** (B) est le chlorothalonil (tétrachloro-1,3 benzène dicarbonitrile).

11. Procédé de fabrication d'une feuille d'emballage en matériau d'emballage qui comporte les étapes qui consistent à :
- prendre une feuille en matériau d'emballage ;
- mélanger, dans un agent de mise en suspension, du composé (A) et du composé (B) suivant l'une des revendications précédentes, pour obtenir un mélange ;
- déposer le mélange sur une des faces de la feuille d'emballage ; et
- laisser sécher pour évaporer l'agent de mise en suspension.

12. Procédé de fabrication suivant la revendication 11, comportant en outre l'étape qui consiste à rajouter un liant dans le mélange.

## Patentansprüche

1. Zusammenstellung, bestehend aus einem Artikel und einem Verpackungsblatt, das den Artikel verpackt, wobei das Blatt eine Funigizid-Zusammensetzung umfasst, umfassend eine Mischung aus
- Verbindung A 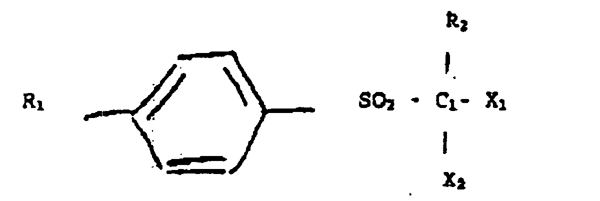 worin R₁ ein Alkyl-, Alkoxy- oder Alkylen-Rest mit 1 bis 6 Kohlenstoffatomen ist, R₂ für H, einen Alkyl- oder Alkylen-Rest mit 1 bis 6 Kohlenstoffatomen steht, X₁ ein Halogen, insbesondere lod, Brom oder Chlor, ist, X₂ ein Halogen, insbesondere lod, Chlor oder Brom ist; und
- Verbindung B mit der Strukturformel: 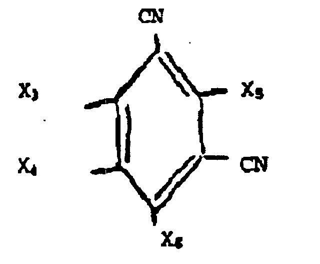 worin X₃, X₄, X₅, X₆ identisch oder verschieden sind und gewählt werden können aus Halogenen, Alkyl-Verbindungen mit 1 bis 6 Kohlenstoffatomen oder Wasserstoff, **dadurch gekennzeichnet, dass**
- die Fungizidzusammensetzung in der Form einer Beschichtung auf die Oberfläche des Blattes aufgetragen wird,
- die Teilchengröße der Mischung in der Beschichtung kleiner als 10 µm ist, und
- der Artikel Seife oder ein Lebensmittelprodukt ist.

2. Zusammenstellung nach Anspruch 1, **dadurch gekennzeichnet, dass** die Teilchengröße kleiner als 5 µm ist.

3. Zusammenstellung nach Anspruch 1 oder 2, **dadurch gekennzeichnet, dass** die Fungizid-Zusammensetzung ein Bindemittel umfasst, insbesondere Amidon oder einen Latex.

4. Zusammenstellung nach Anspruch 1, 2 oder 3, **dadurch gekennzeichnet, dass** die Beschichtung aus der Fungizid-Zusammensetzung ein Gewicht zwischen 2 und 15 g/m² aufweist.

5. Zusammenstellung nach einem der Ansprüche 1 bis 4, **dadurch gekennzeichnet, dass** das Blatt aus Papier besteht, wobei es ein Gewicht im Bereich zwischen 40 g/m² und 150 g/m² aufweist.

6. Zusammenstellung nach Anspruch 1, 2, 3 oder 4, **dadurch gekennzeichnet, dass** das Blatt aus Karton besteht, wobei es ein Gewicht im Bereich zwischen 150 g/m² und 350 g/m² aufweist.

7. Zusammenstellung nach einem der Ansprüche 3 bis 6, **dadurch gekennzeichnet, dass** das Gewichtsverhältnis des Bindemittels zur Mischung zwischen 0,2 und 1,5 liegt.

8. Zusammenstellung nach einem der Ansprüche 1 bis 7, **dadurch gekennzeichnet, dass** die Mischung 10 bis 70 Gew.-% (A) und 90 bis 30 Gew.-% (B) umfasst.

9. Zusammenstellung nach einem der vorangehenden Ansprüche, **dadurch gekennzeichnet, dass** es sich bei (A) um Diiodmethyl-ptolylsulfon handelt.

10. Zusammenstellung nach einem der vorangehenden Ansprüche, **dadurch gekennzeichnet, dass** es sich bei (B) um Chlorthalonil (Tetrachlor-1,3-benzendicarbonitril) handelt.

11. Verfahren zur Herstellung eines Verpackungsblattes aus Verpackungsmaterial, umfassend die Schritte, bestehend aus:
- Bereitstellen eines Blattes aus Verpackungsmaterial;
- Vermischen von Verbindung (A) und Verbindung (B) nach einem der vorstehenden Ansprüche in einem Suspendiermittel, um eine Mischung zu erhalten;
- Aufbringen der Mischung auf eine der Seiten des Verpackungsblattes; und
- Trocknung zum Verdampfen des Suspendiermittels.

12. Herstellungsverfahren gemäß Anspruch 11, umfassend unter anderem den Schritt, bestehend aus dem Zusetzen eines Bindemittels in die Mischung.

## Claims

1. Assembly, comprising an article and a packaging sheet in which said article is packaged, said sheet comprising a fungicidal composition which comprises a mixture
- of compound A 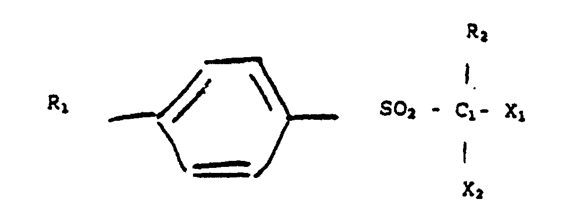 where R₁ is an alkyl, alkoxy or alkylene radical having 1 to 6 carbon atoms, R₂ being H, an alkyl or alkylene radical having 1 to 6 carbon atoms, X₁ being a halogen, more particularly iodine, bromine or chlorine, X₂ being a halogen, more particularly iodine, chlorine or bromine; and
- of compound B of developed formula: 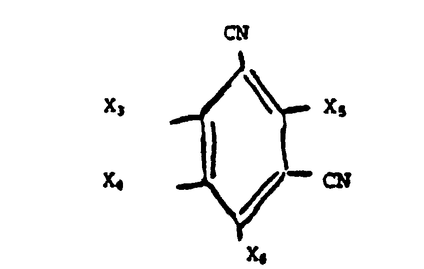 where X₃, X₄, X₅, X₆ which are identical or different may be selected from the halogens, alkyl compounds having 1 to 6 carbon atoms or hydrogen, **characterised in that**
- said fungicidal composition is applied in the shape of a superficial layer on the sheet,
- the particle size of the mixture in the layer is less than 10 µm, and
- said article is soap or a food product.

2. Assembly according to claim 1, **characterised in that** the particle size is less than 5 µm.

3. Assembly according to claim 1 or 2, **characterised in that** the fungicidal composition comprises a binder, more particularly starch or a latex.

4. Assembly according to claim 1, 2 or 3, **characterised in that** the fungicidal composition coating has a weight of between 2 and 15 g/m².

5. Assembly according to one of claims 1 to 4, **characterised in that** the sheet is paper, having a weight between 40 g/m² and 150 g/m².

6. Assembly according to claim 1, 2, 3 or 4, **characterised in that** the sheet is of cardboard, having a weight of between 150 g/m² and 350 g/m².

7. Assembly according to one of claims 3 to 6, **characterised in that** the ratio of binder to mixture by weight is between 0.2 and 1.5.

8. Assembly according to one of claims 1 to 7, **characterised in that** the mixture contains 10 to 70% by weight of (A) and 90% to 30% by weight of (B).

9. Assembly according to one of the preceding claims, **characterised in that** (A) is di-iodomethyl-p-tolylsulphone.

10. Assembly according to one of the preceding claims, **characterised in that** (B) is chlorotalonyl.

11. A method of making a packaging sheet from packaging material comprising the steps of:
- using a sheet of packaging material;
- mixing, in a suspension agent, compound (A) and compound (B) according to one of the preceding claims, to obtain a mixture;
- depositing the mixture on one of the surfaces of the packaging sheet; and
- allowing to dry to evaporate the suspension agent.

12. A production method according to claim 11, further comprising the step of adding a binder to the mixture.
